# FASCICULE DE BREVET EUROPEEN

(11) **EP 1 171 724 B1**
(45) Date de publication et mention de la délivrance du brevet: **04.05.2005**
(21) Numéro de dépôt: 01907851.8
(22) Date de dépôt: 20.02.2001
(51) Int. Cl.: F16F 9/516

(54) **DISPOSITIF FORMANT AMORTISSEUR DISSYMETRIQUE POUR UNE SUSPENSION DE VEHICULE AUTOMOBILE**
ASYMMETRISCHER DÄMPFER FÜR EINE RADAUFHÄNGUNG EINES KRAFTFAHRZEUGS
DEVICE FORMING ASYMMETRIC DAMPER FOR A MOTOR VEHICLE SUSPENSION

(30) Priorité: 23.02.2000 FR 0002262
(43) Date de publication de la demande: 16.01.2002
(73) Titulaire: Peugeot Citroen Automobiles SA, 92200 Neuilly sur Seine (FR)
(72) Inventeur: LAMORLETTE, Bruno, F-78800 Houilles (FR)
(74) Mandataire: Thinat, Michel
(86) Numéro de dépôt international: PCT/FR2001/000494
(87) Numéro de publication internationale: WO 2001/063141

(56) Documents cités:
- DE-U- 7 529 323
- FR-A- 2 476 782
- FR-A- 2 613 796
- FR-A- 2 681 386
- GB-A- 1 315 208
- US-A- 2 201 280
- US-A- 4 284 178

## Description

La présente invention concerne un dispositif formant amortisseur dissymétrique pour une suspension de véhicule automobile, notamment hydropneumatique.

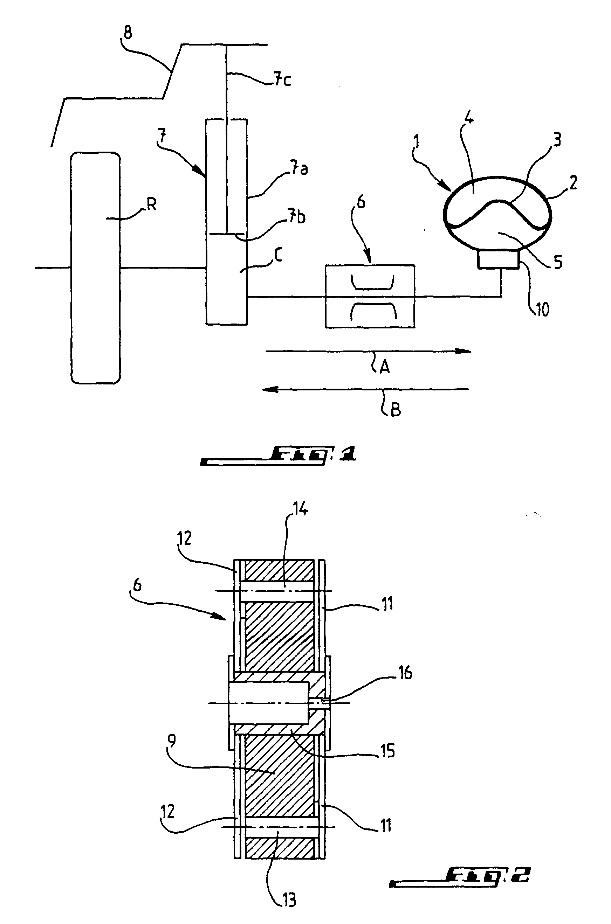

La figure 1 représente très schématiquement une suspension hydropneumatique connue de roue d'un véhicule automobile.

Cette suspension comprend un bloc hydropneumatique 1 comprenant un accumulateur hydropneumatique à enveloppe sphérique 2 comportant à l'intérieur de celle-ci une membrane souple 3 définissant respectivement une chambre à gaz 4 et une chambre à huile 5, et un amortisseur 6 qui, bien que représenté à la figure comme étant séparé de la sphère de suspension 2, est généralement incorporé à la partie inférieure de celle-ci.

L'amortisseur 6 est disposé entre la chambre à huile 5 et une chambre inférieure C définie dans un cylindre 7a d'un vérin de suspension 7 auquel est reliée la roue R. La chambre C est définie sous le piston 7b du vérin 7, solidaire d'une tige de vérin 7c reliée à son extrémité supérieure à la caisse 8 du véhicule. Dans certaines constructions, la tige de vérin 7c est creuse et communique avec la sphère de suspension 2 à sa partie supérieure.

Ce genre de suspension est caractérisé par sa flexibilité qui est assurée par l'accumulateur hydropneumatique 1 et son amortissement qui est assuré par l'amortisseur hydraulique 6 qui a pour rôle de limiter le passage du liquide hydraulique (huile) en attaque dans le sens indiqué par la flèche A, c'est-à-dire lorsque la roue R monte en passant, par exemple, sur un obstacle, et en détente dans le sens indiqué par la flèche B lorsque la roue descend, c'est-à-dire lorsqu'elle tombe dans un trou.

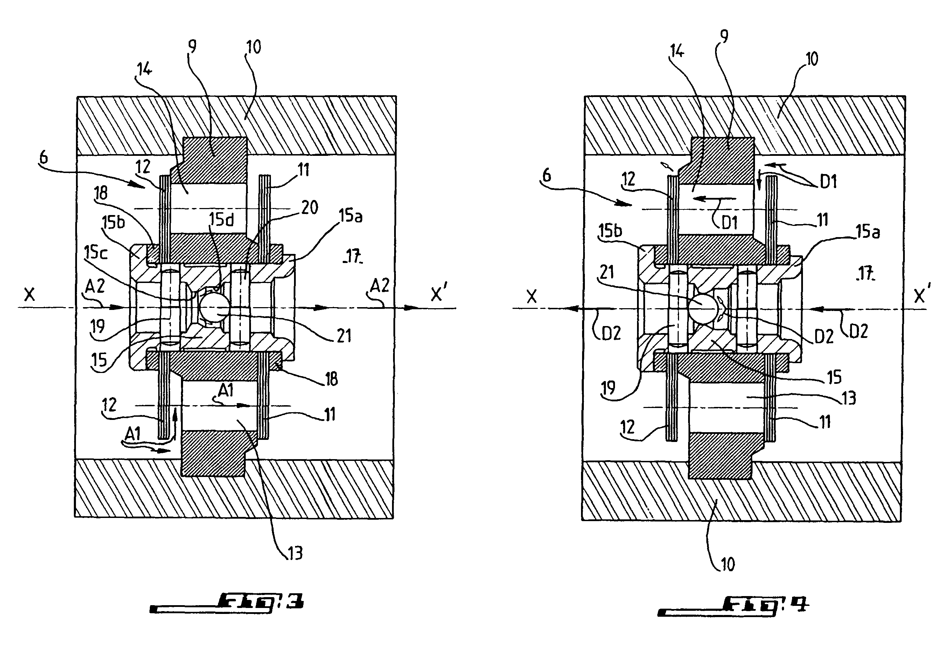

Un amortisseur classique 6 est représenté à la figure 2 et comprend un corps 9 en matériau rigide, tel que de l'acier, fixé dans un embout 10 (voir figure 1) fixé, par exemple par sertissage, en partie inférieure de l'enveloppe sphérique 2, et des clapets flexibles respectivement de détente 11 et d'attaque 12 disposés de chaque côté du corps 9 de l'amortisseur 6 de façon à pouvoir fermer des passages respectifs de liquide hydraulique 13, 14 réalisés transversalement au corps 9 et situés sur une même circonférence vers l'extérieur de celui-ci. L'amortisseur 6 comprend en outre, dans l'axe de celui-ci, une partie centrale 15 pourvue d'un gicleur 16 coaxial à l'axe du corps 9, la partie centrale 15 étant fixée au corps 9 par tout moyen approprié, tel que par exemple par des sertissages qui maintiennent également les clapets flexibles 11, 12 au corps 9 au niveau de leurs parties centrales.

Le débit de liquide passant à travers l'amortisseur 6 dépend des vitesses de débattement de la roue. Ainsi, pour des débits de liquide relativement importants, en tout cas atteignant ou étant supérieurs à un seuil minimal prédéterminé, les clapets 11 ou 12 s'ouvrent suivant le sens de passage, en attaque ou en détente, du liquide à travers l'amortisseur 6 et les clapets 11 et 12 sont précontraints de façon à se soulever pour obtenir un amortissement qui est différent en attaque et en détente. En général, les clapets 11 et 12 sont réglés de façon que le mouvement des roues soit moins amorti en attaque qu'en détente pour un débit de liquide au-delà du seuil minimal prédéterminé. Par contre, à de faibles débits inférieurs au seuil minimal prédéterminé, c'est-à-dire à de faibles vitesses de débattement des roues, le liquide passe à travers le gicleur central 16 de sorte que l'amortissement est le même en détente qu'en attaque, ce qui est préjudiciable au confort des occupants du véhicule.

Afin d'améliorer davantage le confort des occupants du véhicule, un dispositif d'amortissement a déjà été proposé, ce dispositif présentant un amortissement qui, aux faibles vitesses de débattement de la roue du véhicule, est supérieur en détente qu'en attaque.

Cette solution connue est décrite dans le document FR-B-2 681 386, qui décrit un dispositif d'amortissement dans lequel la différence d'amortissement aux faibles vitesses de débattement des roues est obtenue par une pièce souple formant clapet de dissymétrie pour chaque amortisseur. Cette pièce comporte plusieurs pattes encastrées à une extrémité dans le bloc hydropneumatique contenant l'amortisseur et entre lesquelles le liquide peut passer. La partie centrale de la pièce souple, qui est percée d'un trou central, est appliquée ou non sur la partie centrale de l'amortisseur, elle-même percée d'un canal axial formant gicleur.

Cependant, ce dispositif connu présente quelques inconvénients. Tout d'abord, il faut prévoir des moyens de maintien de la pièce souple formant clapet dans le bloc contenant l'amortisseur, ce qui en augmente la complexité et donc le coût. De plus, ce clapet souple risque de fluer au cours du temps et de voir ses caractéristiques altérées avec pour conséquence que la différence d'amortissement n'est plus la même qu'à l'origine. En particulier, l'étanchéité de l'appui du clapet souple sur l'amortisseur en phase de détente n'est plus garantie.

La présente invention a pour but d'éliminer les inconvénients ci-dessus des solutions connues en proposant un amortisseur qui soit simple et peu coûteux à réaliser et dont les caractéristiques ne s'altèrent pas au cours du temps.

A cet effet, le dispositif formant amortisseur dissymétrique pour une suspension de véhicule automobile conforme à l'invention, du type comprenant des clapets situés de part et d'autre du corps de l'amortisseur et agencés pour obtenir, à des débits importants de liquide, un amortissement différent suivant le sens de déplacement du liquide à travers le corps ; une partie centrale s'étendant dans l'axe du corps et pourvue d'un gicleur coopérant avec une pièce mobile pour obtenir, à de faibles débits de liquide, un amortissement différent suivant le sens de déplacement du liquide à travers le gicleur, est caractérisé en ce que la pièce mobile est rigide et située dans la partie centrale du corps de l'amortisseur au niveau du gicleur et est apte à se déplacer, sous l'effet du déplacement du liquide, entre deux positions extrêmes définissant avec le gicleur respectivement deux sections disponibles de passage du liquide, l'une plus grande que l'autre.

Le dispositif comprend avantageusement deux butées dans la partie centrale du corps de l'amortisseur pour limiter la course de la pièce mobile rigide respectivement aux deux positions extrêmes de celle-ci.

L'une au moins des deux butées est une pièce rapportée.

Selon une variante de réalisation, l'une au moins des deux butées est constituée par une surface interne de la partie centrale du corps de l'amortisseur.

Selon un mode de réalisation particulier, la pièce mobile rigide est une bille métallique venant en appui à ses deux positions extrêmes respectivement sur deux pièces rapportées, chacune constituée par une goupille fixée dans la partie centrale du corps de l'amortisseur transversalement à l'axe de ce corps et le gicleur est défini par deux perçages axiaux successifs de diamètres différents, adjacents respectivement aux deux goupilles de butée, de façon que la bille, à l'une ou l'autre de ses positions extrêmes, soit logée dans l'un ou l'autre des deux perçages.

Selon un autre mode de réalisation particulier, la pièce mobile rigide est une bille métallique venant en appui à ses deux positions extrêmes respectivement sur la surface interne de la partie centrale formant siège de la bille et une pièce rapportée fixée dans la partie centrale du corps de l'amortisseur transversalement à l'axe de ce corps et le gicleur est défini par deux perçages axiaux opposés de diamètres différents de façon que la bille, à l'une de ses positions extrêmes en appui sur la pièce rapportée, soit logée dans le perçage de plus grand diamètre et, à son autre position extrême en appui sur le siège, obture le perçage de plus petit diamètre.

Avantageusement, la pièce rapportée de ce mode de réalisation présente la forme générale d'un losange dont les côtés sont incurvés pour permettre le passage du liquide.

Un perçage oblique est réalisé dans la partie centrale du corps de l'amortisseur et débouche dans un perçage axial réalisé entre les deux perçages axiaux de diamètres différents de façon à permettre le passage de liquide en position d'appui de la bille sur son siège, le perçage oblique ayant un diamètre sensiblement égal à celui du perçage axial de plus petit diamètre.

La partie centrale du corps de l'amortisseur est réalisée en une seule pièce ou, selon une variante, est réalisée en deux éléments assemblés l'un dans l'autre par vissage.

Selon un troisième mode de réalisation, la pièce mobile rigide est une navette généralement tubulaire ouverte à ses deux extrémités et montée axialement coulissante dans un alésage axial de la partie centrale du corps de l'amortisseur entre une position extrême en appui sur une pièce rapportée constituée par une bague annulaire fixée dans la partie centrale transversalement à l'axe du corps de façon à permettre le passage de liquide à travers le gicleur et des perçages obliques formant également gicleur réalisés à travers la paroi de la navette mettant en communication l'alésage de guidage de la navette avec l'intérieur de celle-ci et l'autre position extrême en appui sur un siège correspondant de la partie centrale de façon à obstruer le passage du liquide à travers les passages obliques et à permettre le passage du liquide uniquement à travers le gicleur.

Le gicleur est un perçage axial réalisé à travers la paroi d'extrémité de la navette opposée à la bague annulaire de butée et communiquant avec l'intérieur de la navette.

Les clapets sont flexibles et ceux situés d'un même côté sont des clapets d'attaque, tandis que ceux situés du côté opposé sont des clapets de détente et les clapets sont agencés de façon à obtenir un amortissement plus important en détente qu'en attaque à partir d'un certain débit de liquide.

A la position extrême de la pièce mobile à laquelle la section de passage du liquide est plus grande correspond un amortissement en attaque moins important que l'amortissement en détente obtenu par la section plus faible de passage du liquide à l'autre position extrême de la pièce mobile.

De préférence, la suspension est du type hydraulique ou hydropneumatique.

L'invention vise également un bloc hydropneumatique pour suspension hydropneumatique de véhicule automobile, comprenant un accumulateur hydropneumatique à membrane et un dispositif formant amortisseur dissymétrique et qui est caractérisé en ce que le dispositif formant amortisseur est tel que défini précédemment.

L'invention sera mieux comprise et d'autres buts, caractéristiques, détails et avantages de celle-ci apparaîtront plus clairement dans la description explicative qui va suivre faite en référence aux dessins annexés donnés uniquement à titre d'exemple illustrant plusieurs modes de réalisation de l'invention et dans lesquels :
- la figure 1 représente schématiquement une suspension hydropneumatique connue d'une roue d'un véhicule automobile ;
- la figure 2 représente un amortisseur connu pouvant être utilisé dans la suspension hydropneumatique de la figure 1 ;
- les figures 3 et 4 sont des vues en coupe longitudinale de l'amortisseur dissymétrique suivant un premier mode de réalisation de l'invention ;
- les figures 5 et 6 sont des vues en coupe longitudinale représentant un amortisseur dissymétrique suivant un second mode de réalisation de l'invention ;
- la figure 7 est une vue en coupe représentant une variante de réalisation de l'amortisseur dissymétrique des figures 5 et 6 ; et
- la figure 8 est une vue en coupe longitudinale d'un amortisseur dissymétrique suivant un troisième mode de réalisation de l'invention.

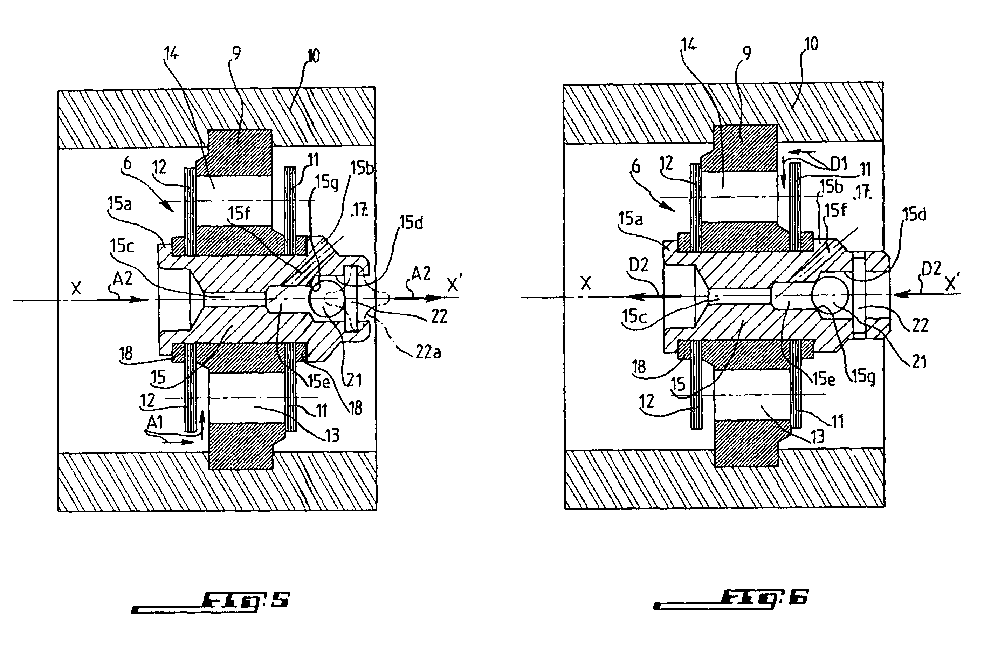

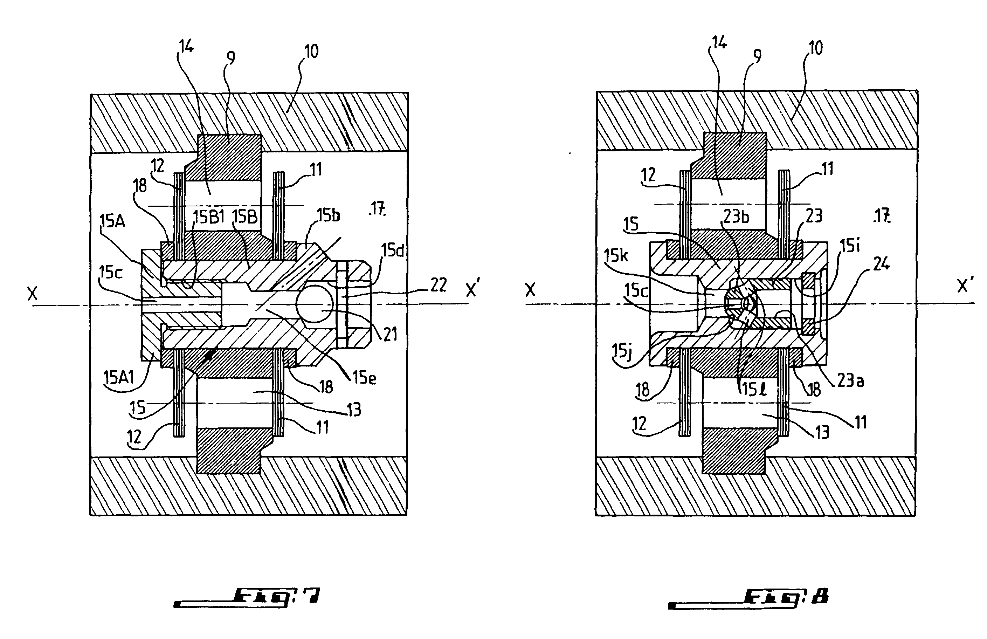

Les figures 3 et 4 représentent de façon détaillée le dispositif formant amortisseur dissymétrique suivant le premier mode de réalisation de l'invention.

Les pièces de ce dispositif communes à celles du dispositif connu de la figure 2 et accomplissant les mêmes fonctions que ce dernier portent les mêmes références et il en sera de même en ce qui concerne les autres modes de réalisation qui seront décrits ultérieurement.

Le dispositif amortisseur 6 tel que représenté aux figures 3 et 4 comprend un corps rigide 9 fixé dans un embout 10 solidaire en partie inférieure de l'accumulateur hydropneumatique 1 (voir figure 1) et dans lequel est défini un chambrage 17 communiquant avec la chambre à liquide (huile) 5.

Le corps 9 comporte des perçages 13 réalisés à travers le corps parallèlement à son axe longitudinal X-X' et angulairement séparés les uns des autres sur une même circonférence, les perçages 13 pouvant être fermés sur une face du corps 9, celle située à droite par rapport aux figures 3 et 4, par des clapets flexibles de détente 11. Le corps 9 comporte également d'autres perçages 14 réalisés à travers celui-ci parallèlement à l'axe X-X' et pouvant être fermés sur l'autre face par des clapets flexibles d'attaque 12. Les clapets d'attaque 12 sont axialement décalés des perçages 13 de façon à permettre le libre passage du liquide à travers les perçages 13 en attaque comme symbolisé par les flèches A1 en figure 3, tandis que les clapets de détente 11 sont axialement décalés des perçages 14 pour permettre le libre passage du liquide à travers les perçages 14 comme symbolisé par les flèches D1 en figure 4.

Une partie centrale 15, réalisée en une seule pièce, est fixée dans le corps 9 coaxialement à celui-ci par un sertissage 15a à une extrémité de la partie 15 et qui maintient les clapets de détente 11 par l'intermédiaire d'une rondelle 18, l'extrémité opposée de la partie centrale 15 comportant un épaulement 15b plaqué contre les clapets d'attaque 12 par l'intermédiaire d'une autre rondelle 18.

La partie centrale 15 est percée axialement et comporte dans sa partie médiane deux perçages successifs adjacents de plus petit diamètre 15c et de plus grand diamètre 15d situés respectivement à gauche et à droite au vu des figures 3 et 4 et situés entre deux goupilles axialement espacées 19, 20 fixées dans la partie centrale 15 transversalement à l'axe X-X' du corps 9.

Une bille métallique 21, par exemple en acier, est logée dans la partie centrale 15 entre les deux goupilles de butée 19, 20 et peut se déplacer, sous l'effet du déplacement du liquide, entre deux positions extrêmes en appui respectivement sur les deux goupilles 19, 20 de façon qu'en étant en appui sur la goupille 20, la section de passage du liquide en attaque dans le sens indiqué par les flèches A2 et définie par la différence de diamètres entre celui du perçage 15d et celui de la bille 21 soit supérieure à la section de passage du liquide en détente comme symbolisé par les flèches D2 et définie par la différence de diamètres entre le diamètre du perçage 15c et celui de la bille 21 lorsqu'elle est en appui sur la goupille 19.

Ainsi, à des débits de liquide relativement importants, atteignant ou étant supérieurs à un seuil minimal prédéterminé, lorsque la roue passe sur un obstacle, le liquide traverse les perçages 13 dans le sens indiqué par les flèches A1 et soulève les clapets flexibles 11 et, lorsque la roue tombe dans un trou, un certain volume de liquide va passer de la chambre 5 vers le vérin de suspension 7 et, du fait que le débit est important, le liquide traverse les perçages 14 dans le sens indiqué par les flèches D1 pour soulever les clapets flexibles 12. Par les clapets 11, 12, par exemple en prévoyant un nombre de clapets 12 supérieur au nombre des clapets 11 ou par un empilage de lamelles de chaque clapet 12 plus important que celui de chaque clapet 11 ou encore en jouant sur l'épaisseur des clapets, il est possible d'obtenir un amortissement plus important en détente qu'en attaque à des débits de liquide relativement importants.

Dans le cas de faibles débits inférieurs au seuil minimal prédéterminé, le liquide, en attaque, déplace la bille métallique 21 vers la droite pour l'amener en appui sur la goupille 20 de façon que le liquide traverse le gicleur défini par le perçage ouvert 15c et la section de passage définie entre le perçage de plus grand diamètre 15d et la bille 21. En détente, le liquide déplace la bille 21 pour l'amener en appui sur la goupille 19 de sorte que le liquide traverse la section, plus petite, définie entre le perçage de plus petit diamètre 15c et la bille 21, ce qui se traduit par un amortissement plus important en détente qu'en attaque.

Autrement dit, l'amortissement est supérieur en détente qu'en attaque, indépendamment de la vitesse de débattement vertical de la roue.

En se reportant au second mode de réalisation représenté aux figures 5 et 6, le dispositif amortisseur 6 comprend un corps 9 et des clapets de détente 11 et d'attaque 12 identiques à ceux décrits dans le premier mode de réalisation des figures 3 et 4.

Selon ce second mode de réalisation, la partie centrale 15, qui est en une seule pièce et est fixée au corps 9 de la même manière que la partie centrale 15 du premier mode de réalisation, c'est-à-dire par un sertissage 15a à une extrémité et un épaulement 15b à l'autre extrémité plaquant les clapets 11, 12 sur les faces correspondantes du corps 9 par l'intermédiaire des rondelles 18, comporte un perçage axial 15c formant gicleur communiquant avec un autre perçage axial de plus grand diamètre 15d par l'intermédiaire d'un perçage axial 15e d'un diamètre intermédiaire entre celui du perçage 15c et celui du perçage 15d.

Le perçage intermédiaire 15e communique avec un perçage oblique 15f réalisé dans la partie centrale 15 et débouchant dans le chambrage 17. Le perçage 15f a un diamètre sensiblement égal à celui du perçage 15c.

Une bille métallique 21 est logée dans le perçage 15d et est apte à occuper, sous l'effet du déplacement du liquide, une position extrême en appui sur une butée 22 fixée dans la partie centrale 15 transversalement à l'axe X-X' de celle-ci à l'opposé du perçage intermédiaire 15e et l'autre position extrême en appui sur un siège 15g réalisé dans la surface de liaison entre le perçage intermédiaire 15e et le perçage de plus grand diamètre 15d.

La butée 22, telle que représentée en traits mixtes en vue de face en figure 5, présente la forme générale d'un losange dont les côtés 22a sont incurvés pour permettre le passage du liquide.

A des débits importants, quand la roue passe sur un obstacle, donc en attaque, le liquide soulève les clapets flexibles 11 et quand la roue tombe dans un trou, en détente, un certain volume de liquide circule de la chambre 5 vers le vérin de suspension 7 et soulève les clapets flexibles 12 et en réglant convenablement ces clapets, on peut obtenir un amortissement plus important en détente qu'en attaque.

Lors de faibles débits de liquide, celui-ci, en attaque, traverse le perçage 15c et le perçage 15e et pousse la bille 21 en appui sur la butée 22 de sorte que le liquide traverse également la section de passage définie entre le perçage 15d et la bille 21. Le débit de liquide dans le perçage oblique 15f est infime du fait que le diamètre du perçage 15d est largement supérieur à celui du perçage oblique 15f. En détente, le liquide circule dans le sens indiqué par les flèches D2 (figure 6) et pousse la bille 21 en appui de façon étanche sur le siège 15g, obturant ainsi les perçages 15e et 15c. Dans ces conditions, le liquide provenant de la chambre 5 et arrivant dans le chambrage 17 traverse le perçage de petit diamètre 15f et ensuite le perçage 15c. Dès lors, l'amortissement est plus important en détente qu'en attaque.

La variante de réalisation du dispositif amortisseur représentée en figure 7 est quasiment identique au mode de réalisation représenté aux figures 5 et 6, sauf que la partie centrale 15 est constituée de deux parties 15A et 15B amoviblement fixées l'une dans l'autre. Plus précisément, la partie 15A présente la forme générale d'un écrou vissé dans un trou taraudé correspondant 15B1 de la partie 15B de façon à plaquer les clapets 11, 12 sur les faces correspondantes du corps 9 par l'intermédiaire de l'épaulement 15b, de la partie épaulée 15A1 de la partie 15A et des rondelles 18. Dans cette configuration, le perçage 15c formant gicleur est réalisé à travers la partie 15A et communique avec le perçage formant gicleur de plus grand diamètre 15d par l'intermédiaire du perçage 15e.

Selon le troisième mode de réalisation représenté en figure 8, la pièce mobile permettant d'obtenir à de faibles débits un amortissement supérieur en détente qu'en attaque, est constituée par une navette métallique 23 pouvant se déplacer de façon coulissante dans un alésage axial 15i de la pièce centrale 15, qui est réalisée en une seule pièce, entre une position extrême en appui sur une butée 24 située côté chambrage 17 et constituée par une bague annulaire et une position extrême d'appui sur un siège 15j défini dans la surface de raccordement entre l'alésage 15i et un perçage axial de plus petit diamètre 15k de la pièce 15.

La navette 23 présente la forme générale d'un tube rigide ouvert à ses deux extrémités et comporte un perçage axial de petit diamètre formant gicleur 15c suivi d'un second perçage de plus grand diamètre 23a faisant face à la bague annulaire de butée 24 et d'un diamètre identique au diamètre interne de la bague 24. Le perçage 15c est réalisé à travers une paroi d'extrémité 23b formant nez approximativement tronconique de la navette 23. Des perçages inclinés 15l sont réalisés à travers la paroi de la navette 23 en débouchant dans la zone de communication entre les deux perçages 15c et 23a. Les perçages obliques 15l mettent ainsi en communication la partie de l'alésage 15i entourant la paroi d'extrémité 23b de la navette 23 et le perçage 23a.

A des débits de liquide relativement importants, celui-ci, en attaque et en détente, coopère avec les clapets 11 et 12 de façon à obtenir un amortissement supérieur en détente qu'en attaque comme dans les précédents modes de réalisation du fait que les clapets de détente 11 ont une structure laminée différente de celle des clapets d'attaque 12 de façon à se soulever différemment en attaque et en détente.

A de faibles débits de liquide, celui-ci, en attaque, traverse le perçage amont 15k pour déplacer la navette 23 en appui sur la bague de butée 24, dégageant ainsi le nez 23b de son siège 15j. De la sorte, le liquide passe à travers les perçages formant gicleur 15c et 15l. En détente, à de faibles débits, le liquide passe par le perçage central 23a pour plaquer la navette 23, par son nez 23b, sur le siège 15j de façon étanche. De ce fait, le liquide passe uniquement par le perçage central formant gicleur 15c, le liquide ne pouvant plus sortir par les perçages obliques 15l.

Le dispositif formant amortisseur dissymétrique pour véhicule automobile permet un amortissement supérieur en détente qu'en attaque indépendamment de la vitesse de débattement vertical de la roue. Du fait que la pièce mobile constituée par une bille ou une navette soit réalisée en un matériau rigide, celle-ci ne risque ni de s'altérer, ni de se déformer au cours du temps et les caractéristiques d'amortissement sont conservées. Par ailleurs, la réalisation d'un gicleur à surface dissymétrique n'est, en fait, guère différente de celle d'un gicleur à surface symétrique, ce qui réduit le coût de fabrication.

## Revendications

1. Dispositif formant amortisseur dissymétrique pour une suspension de véhicule automobile, du type comprenant des clapets (11, 12) situés de part et d'autre du corps (9) de l'amortisseur (6) et agencés pour obtenir, à des débits importants de liquide, un amortissement différent suivant le sens de déplacement du liquide à travers le corps (9) ; une partie centrale (15) s'étendant dans l'axe du corps (9) et pourvue d'un gicleur coopérant avec une pièce mobile (21 ; 23) pour obtenir, à de faibles débits de liquide, un amortissement différent suivant le sens de déplacement du liquide à travers le gicleur ; **caractérisé en ce que** la pièce mobile (21 ; 23) est rigide et située dans la partie centrale (15) du corps de l'amortisseur (6) au niveau du gicleur et est apte à se déplacer, sous l'effet du déplacement du liquide, entre deux positions extrêmes définissant avec le gicleur respectivement deux sections disponibles de passage du liquide, l'une plus grande que l'autre.

2. Dispositif selon la revendication 1, **caractérisé en ce qu'**il comprend deux butées dans la partie centrale (15) du corps (9) de l'amortisseur (6) pour limiter la course de la pièce mobile rigide (21 ; 23) respectivement aux deux positions extrêmes de celle-ci.

3. Dispositif selon la revendication 2, **caractérisé en ce que** l'une (19 ; 20 ; 22 ; 24) des deux butées est une pièce rapportée.

4. Dispositif selon la revendication 2, **caractérisé en ce que** l'une (15g ; 15j) des deux butées est constituée par une surface interne de la partie centrale (15).

5. Dispositif selon l'une des revendications 1 à 3, **caractérisé en ce que** la pièce mobile rigide est une bille métallique (21) venant en appui à ses deux positions extrêmes respectivement sur deux pièces rapportées, chacune constituée par une goupille (19 ; 20) fixée dans la partie centrale (15) du corps (9) de l'amortisseur (6) transversalement à l'axe de ce corps et **en ce que** le gicleur est défini par deux perçages axiaux successifs (15c, 15d) de diamètres différents et adjacents respectivement aux deux goupilles de butée (19, 20), de façon que la bille (21), à l'une ou l'autre de ses positions extrêmes, soit logée dans l'un ou l'autre des deux perçages.

6. Dispositif selon la revendication 4, **caractérisé en ce que** la pièce mobile rigide est une bille métallique (21) venant en appui à ses deux positions extrêmes respectivement sur la surface interne (15g) de la partie centrale (15) formant siège de la bille (21) et une pièce rapportée (22) fixée dans la partie centrale (15) transversalement à l'axe du corps (9) et **en ce que** le gicleur est défini par deux perçages axiaux opposés (15c, 15d) de diamètres différents de façon que la bille (21), à l'une de ses positions extrêmes en appui sur la pièce rapportée (22) soit logée dans le perçage de plus grand diamètre (15d) et, à son autre position extrême en appui sur le siège (15g), obture le perçage de plus petit diamètre (15c).

7. Dispositif selon la revendication 6, **caractérisé en ce que** la pièce rapportée (22) présente la forme générale d'un losange dont les côtés (22a) sont incurvés pour permettre le passage du liquide.

8. Dispositif selon la revendication 6 ou 7, **caractérisé en ce qu'**il comprend un perçage oblique (15f) réalisé dans la partie centrale (15) du corps (9) de l'amortisseur (6) débouchant dans un perçage axial (15e) réalisé entre les deux perçages axiaux de diamètres différents (15c, 15d) de façon à permettre le passage du liquide en position d'appui de la bille (21) sur son siège (15g), le perçage oblique (15f) ayant un diamètre sensiblement égal à celui du perçage de plus petit diamètre (15d).

9. Dispositif selon l'une des revendications précédentes, **caractérisé en ce que** la partie centrale (15) du corps (9) de l'amortisseur (6) est réalisée en une seule pièce.

10. Dispositif selon l'une des revendications 6 à 8, **caractérisé en ce que** la partie centrale (15) du corps (9) de l'amortisseur (6) est réalisée en deux éléments (15A, 15B) assemblés l'un (15A) dans l'autre (15B) par vissage.

11. Dispositif selon l'une des revendications 1 à 3, **caractérisé en ce que** la pièce mobile rigide est une navette rigide généralement tubulaire (23) ouverte à ses deux extrémités et montée axialement coulissante dans un alésage axial (15i) de la partie centrale (15) du corps (9) de l'amortisseur (6) entre une position extrême en appui sur une pièce rapportée constituée par une bague annulaire (24) fixée dans la partie centrale (15) transversalement à l'axe (X-X') du corps (9) de façon à permettre le passage de liquide à travers le gicleur et à travers des perçages obliques formant également gicleur (151) réalisés à travers une paroi (23a) de la navette (23) mettant en communication l'alésage de guidage (15i) de la navette (23) avec l'intérieur de celle-ci et l'autre position extrême en appui sur un siège correspondant (15j) de la partie centrale (15) de façon à obstruer le passage de liquide à travers les passages obliques (15l) et à permettre le passage du liquide uniquement à travers le gicleur (15c).

12. Dispositif selon la revendication 11, **caractérisé en ce que** le gicleur est un perçage axial (15c) réalisé à travers la paroi d'extrémité (23b) de la navette (23) opposée à la bague annulaire de butée (24) et communiquant avec l'intérieur de la navette (23).

13. Dispositif selon l'une des revendications précédentes, **caractérisé en ce que** les clapets précités sont flexibles et ceux situés d'un même côté sont des clapets d'attaque (12), tandis que ceux situés du côté opposé sont des clapets de détente (11) et **en ce que** les clapets (11, 12) sont agencés de façon à obtenir un amortissement plus important en détente qu'en attaque à partir d'un certain débit de liquide.

14. Dispositif selon l'une des revendications précédentes, **caractérisé en ce qu'**à la position extrême de la pièce mobile (21 ; 23) à laquelle la section de passage du liquide est plus grande correspond un amortissement en attaque moins important que l'amortissement en détente obtenu par la section plus faible de passage du liquide à l'autre position extrême de la pièce mobile (21 ; 23).

15. Dispositif selon l'une des revendications précédentes, **caractérisé en ce que** la suspension est du type hydraulique ou hydropneumatique.

16. Bloc hydropneumatique pour suspension hydropneumatique de véhicule automobile, comprenant un accumulateur hydropneumatique (1) à membrane (3) et un dispositif formant amortisseur dissymétrique (6), **caractérisé en ce que** le dispositif formant amortisseur (6) est tel que défini dans l'une quelconque des revendications précédentes.

## Patentansprüche

1. Asymmetrische Dämpfungsvorrichtung für eine Radaufhängung eines Kraftfahrzeugs, vom Typ mit Klappenventilen (11, 12), die beiderseits des Körpers (9) des Dämpfers (6) liegen und dazu vorgesehen sind, bei hohen Flüssigkeitsdurchflussmengen eine unterschiedliche Dämpfung in Strömungsrichtung der Flüssigkeit durch den Körper (9) zu erhalten, mit einem Mittelteil (15), das sich in der Achse des Körpers (9) erstreckt und mit einer Düse versehen ist, die mit einem beweglichen Teil (21; 23) zusammenwirkt, um bei geringen Flüssigkeitsdurchflussmengen eine unterschiedliche Dämpfung in Strömungsrichtung der Flüssigkeit durch die Düse zu erhalten, **dadurch gekennzeichnet, dass** das bewegliche Teil (21; 23) starr ist und in dem Mittelteil (15) des Körpers des Dämpfers (6) im Bereich der Düse liegt und sich unter der Wirkung der Strömung der Flüssigkeit zwischen zwei Endstellungen verlagern kann, die mit der Düse zwei jeweilige verfügbare Querschnitte für den Durchtritt der Flüssigkeit definieren, von denen der eine größer als der andere ist.

2. Vorrichtung nach Anspruch 1, **dadurch gekennzeichnet, dass** sie zwei Anschläge im Mittelteil (15) des Körpers (9) des Dämpfers (6) enthält, um den Weg des starren beweglichen Teils (21; 23) auf die beiden jeweiligen Endstellungen desselben zu begrenzen.

3. Vorrichtung nach Anspruch 2, **dadurch gekennzeichnet, dass** der eine (19; 20; 22; 24) der beiden Anschläge ein angesetztes Teil ist.

4. Vorrichtung nach Anspruch 2, **dadurch gekennzeichnet, dass** der eine (15g; 15j) der beiden Anschläge aus einer Innenfläche des Mittelteils (15) besteht.

5. Vorrichtung nach einem der Ansprüche 1 bis 3, **dadurch gekennzeichnet, dass** das starre bewegliche Teil eine Metallkugel (21) ist, die sich in ihren beiden Endstellungen an zwei jeweiligen angesetzten Teilen abstützt, von denen jedes aus einem Stift (19; 20) besteht, der in dem Mittelteil (15) des Körpers (9) des Dämpfers (6) quer zur Achse dieses Körpers befestigt ist, und dass die Düse von zwei aufeinanderfolgenden Axialbohrungen (15c, 15d) definiert wird, die unterschiedliche Durchmesser haben und an die beiden jeweiligen Anschlagsstifte (19, 20) so angrenzen, dass die Kugel (21) in ihrer einen oder anderen Endstellung in der einen oder anderen der beiden Bohrungen aufgenommen ist.

6. Vorrichtung nach Anspruch 4, **dadurch gekennzeichnet, dass** das starre bewegliche Teil eine Metallkugel (21) ist, die sich in ihren beiden Endstellungen an der den Sitz der Kugel (21) bildenden Innenfläche (15g) des Mittelteils (15) bzw. einem angesetzten Teil (22) abstützt, das in dem Mittelteil (15) quer zur Achse des Körpers (9) befestigt ist, und dass die Düse von zwei entgegengesetzten Axialbohrungen (15c, 15d) definiert wird, die unterschiedliche Durchmesser haben, so dass die Kugel (21) in ihrer einen Endstellung in Abstützung an dem angesetzten Teil (22) In der im Durchmesser größeren Bohrung (15d) aufgenommen ist und in ihrer anderen Endstellung in Abstützung an dem Sitz (15g) die im Durchmesser kleinere Bohrung (15c) versperrt.

7. Vorrichtung nach Anspruch 6, **dadurch gekennzeichnet, dass** das angesetzte Teil (22) insgesamt die Form einer Raute hat, deren Seiten (22a) gekrümmt sind, um den Durchtritt der Flüssigkeit zu gestatten.

8. Vorrichtung nach Anspruch 6 oder 7, **dadurch gekennzeichnet, dass** sie eine schräge Bohrung (15f) aufweist, die in dem Mittelteil (15) des Körpers (9) des Dämpfers (6) ausgeführt ist und in eine axiale Bohrung (15e) mündet, die zwischen den beiden im Durchmesser unterschiedlichen axialen Bohrungen (15c, 15d) so ausgeführt ist, dass sie den Durchtritt der Flüssigkeit In Abstützsteliung der Kugel (21) an ihrem Sitz (15g) ermöglicht, wobei die schräge Bohrung (15f) im wesentlichen den gleichen Durchmesser wie die kleinere Bohrung (15c) hat.

9. Vorrichtung nach einem der vorangehenden Ansprüche, **dadurch gekennzeichnet, dass** das Mittelteil (15) des Körpers (9) des Dämpfers (6) aus einem Stück hergestellt ist.

10. Vorrichtung nach einem der Ansprüche 6 bis 8, **dadurch gekennzeichnet, dass** das Mittelteil (15) des Körpers (9) des Dämpfers (6) aus zwei Teilen (15A, 15B) hergestellt ist, die durch Einschrauben des einen Teils (15A) in das andere Teil (15B) zusammengefügt sind.

11. Vorrichtung nach einem der Ansprüche 1 bis 3, **dadurch gekennzeichnet, dass** das starre bewegliche Teil ein starrer, insgesamt rohrförmiger Schieber (23) ist, der an seinen beiden Enden offen und in einer axialen Ausdrehung (15i) des Mittelteils (15) des Körpers (9) des Dämpfers (6) axial gleitbeweglich gelagert ist, und zwar zwischen einer Endstellung in Abstützung an einem angesetzten Teil, das aus einem Ring (24) besteht, der in dem Mittelteil (15) quer zur Achse (X-X') des Körpers (9) so befestigt ist, dass er den Durchtritt der Flüssigkeit durch die Düse und durch die ebenfalls eine Düse bildenden schrägen Bohrungen (15l) gestattet, die durch eine Wand (23a) des Schiebers (23) ausgebildet sind und die Ausdrehung (15i) zum Führen des Schiebers (23) mit dessen Innenraum verbinden, und der anderen Endstellung in Abstützung an einem entsprechenden Sitz (15j) des Mittelteils (15), so dass der Durchtritt der Flüssigkeit durch die schrägen Bohrungen (15l) versperrt wird und der Durchtritt der Flüssigkeit nur durch die Düse (15c) möglich ist.

12. Vorrichtung nach Anspruch 11, **dadurch gekennzeichnet, dass** die Düse eine axiale Bohrung (15c) ist, die durch die endseitige Wand (23b) des Schiebers (23) ausgeführt ist. die dem Anschlagsring (24) entgegengesetzt ist, und mit dem Innenraum des Schiebers (23) in Verbindung steht.

13. Vorrichtung nach einem der vorangehenden Ansprüche, **dadurch gekennzeichnet, dass** die vorgenannten Ventils flexibel sind und die auf einer gleichen Seite befindlichen Ventile Ventile (12) für die Einfederung sind, während die auf der entgegengesetzten Seite befindlichen Ventile Ventile (11) für die Ausfederung sind, und dass die Ventile (11, 12) so angeordnet sind, dass ab einer bestimmten Flüssigkeitsdurchflussmenge bei der Ausfederung eine stärkere Dämpfung besteht als bei der Einfederung.

14. Vorrichtung nach einem der vorangehenden Ansprüche, **dadurch gekennzeichnet, dass** der Endstellung des beweglichen Teils (21; 23), in welcher der Querschnitt zum Durchtritt der Flüssigkeit größer ist, eine weniger starke Einfederungsdämpfung als die Ausfederungsdämpfung entspricht, die mit dem kleineren Querschnitt zum Durchtritt der Flüssigkeit in der anderen Endstellung des beweglichen Teils (21; 23) erhalten wird.

15. Vorrichtung nach einem der vorangehenden Ansprüche, **dadurch gekennzeichnet, dass** die Radaufhängung von hydraulischer oder hydropneumatischer Art ist.

16. Hydropneumatischer Block für eine hydropneumatische Radaufhängung eines Kraftfahrzeugs, mit einem hydropneumatischen Speicher (1) mit Membran (3) und einer asymmetrischen Dämpfervorrichtung (6), **dadurch gekennzeichnet, dass** die Dämpfervorrichtung (6) wie in einem der vorangehenden Ansprüche definiert ist.

## Claims

1. Device forming an asymmetric damper for a motor vehicle suspension of the type comprising valves (11, 12) situated on either side of the body (9) of the damper (6), which are arranged to obtain damping which is different according to the direction of travel of the liquid through the body (9) with large flows of liquid; a central part (15) extending along the axis of the body (9), which is provided with a jet working together with a mobile part (21; 23) to obtain damping which is different according to the direction of travel of the liquid through the jet with low flows of liquid; **characterised by** the fact that the mobile part (21; 23) is rigid, situated in the central part (15) of the body of the damper (6) near the jet and due to the effect of the movement of the liquid is able to move between two extreme positions, defining with the jet two sections available for the liquid to pass respectively, one larger than the other.

2. Device according to claim 1, **characterised by** the fact that it comprises two stops in the central part (15) of the body (9) of the damper (6) to limit the travel of the rigid mobile part (21; 23) to its two extreme positions respectively.

3. Device according to claim 2, **characterised by** the fact that one (19; 20; 22; 24) of the two stops is a detachable part.

4. Device according to claim 2, **characterised by** the fact that one (15g; 15j) of the two stops is formed by an internal surface of the central part (15).

5. Device according to one of claims 1 to 3, **characterised by** the fact that the rigid mobile part is a metal ball (21), which is supported in its two extreme positions respectively on two detachable parts, each formed by a pin (19; 20), which is fixed in the central part (15) of the body (9) of the damper (6) crosswise to the axis of this body, and that the jet is defined by two successive axial holes (15c, 15d) of different diameters, which are adjacent to the two stop pins (19, 20) respectively, so that in one or other of its extreme positions the ball (21) is housed in one or other of the two holes.

6. Device according to claim 4, **characterised by** the fact that the rigid mobile part is a metal ball (21), which is supported in its two extreme positions respectively on the internal surface (15g) of the central part (15), forming a seat for the ball (21) and a detachable part (22), which is fixed in the central part (15) crosswise to the axis of the body (9), and that the jet is defined by two opposing axial holes (15c, 1 5d) of different diameters so that in one of its extreme positions, where it is supported on the detachable part (22), the ball (21) is housed in the hole with the larger diameter (15d) and in its other extreme position, where it is supported on the seat (15g), it blocks off the hole with the smaller diameter (15d).

7. Device according to claim 6, **characterised by** the fact that the detachable part (22) has the general shape of a diamond, the sides of which (22a) are curved to allow the liquid to pass.

8. Device according to claim 6 or 7, **characterised by** the fact that it comprises an oblique hole (15f). which is made in the central part (15) of the body (9) of the damper (6), ending in an axial hole (15e), which is made between the two axial holes with different diameters (15c, 15d), so as to allow the liquid to pass in the position where the ball (21) is supported on its seat (15g), the oblique hole (15f) having a diameter which is more or less equal to that of the hole with the smaller diameter (15c).

9. Device according to one of the previous claims, **characterised by** the fact that the central part (15) of the body (9) of the damper (6) is made in a single piece.

10. Device according to one of claims 6 to 8, **characterised by** the fact that the central part (15) of the body (9) of the damper (6) is made of two elements (15A, 15B) assembled one (15A) inside the other (15B) by screwing.

11. Device according to one of claims 1 to 3, **characterised by** the fact that the rigid mobile part is a rigid, generally tubular shuttle (23), which is open at both ends, fitted to slide axially in an axial hole (15i) in the central part (15) of the body (9) of the damper (6) between an extreme position, which is supported on a detachable part formed by an annular ring (24), which is fixed in the central part (15) crosswise to the axis (X-X') of the body (9), so as to allow the liquid to pass through the jet and through the oblique holes also forming the jet (15l), which are made through a wall (23a) of the shuttle (23), making the guide hole (15i) of the shuttle (23) communicate with the Inside of this, and the other extreme position, which is supported on a corresponding seat (15j) of the central part (15), so as to block the liquid passing through the oblique passages (15l) and allow the liquid to pass only through the jet (15c).

12. Device according to claim 11, **characterised by** the fact that the jet is an axial hole (15c), which is made through the end wall (23b) of the shuttle (23) opposite the annular stop ring (24), communicating with the inside of the shuttle (23).

13. Device according to one of the previous claims, **characterised by** the fact that the valves indicated above are flexible and those situated on one and the same side are working valves (12), whereas those situated on the opposite side are release valves (11), and that the valves (11, 12) are arranged so as to obtain greater damping when releasing than when working from a certain flow of liquid.

14. Device according to one of the previous claims, **characterised by** the fact that the extreme position of the mobile part (21; 23), at which the section for the liquid to pass is larger, corresponds to damping when working which is smaller than damping when releasing, which is obtained by the smaller section for the liquid to pass to the other extreme position of the mobile part (21; 23).

15. Device according to one of the previous claims, **characterised by** the fact that the suspension is of the hydraulic or hydropneumatic type.

16. Hydropneumatic block for hydropneumatic suspension of a motor vehicle, comprising a hydropneumatic accumulator (1) with a membrane (3) and a device forming an asymmetric damper (6), **characterised by** the fact that the device forming the damper (6) is such as defined in any one of the previous claims.
